# EUROPÄISCHE PATENTSCHRIFT

(11) **EP 4 119 830 B1**
(45) Veröffentlichungstag und Bekanntmachung des Hinweises auf die Patenterteilung: **28.08.2024**
(21) Anmeldenummer: 22000183.8
(22) Anmeldetag: 13.07.2022
(51) Int. Cl.: F16L 27/10, F16L 27/11, F16L 51/02, F16L 59/06, F16L 59/14, F16L 55/033, F01N 13/18, B22F 10/28, B22F 10/38, F16L 11/12, B22F 5/10

(54) **FLEXIBLES ELEMENT MIT GEOMETRISCH MODIFIZIERTEM WELLENBALG**
FLEXIBLE ELEMENT WITH GEOMETRICALLY MODIFIED BELLOWS
ÉLÉMENT FLEXIBLE AVEC UN SOUFFLET ONDULÉ GÉOMÉTRIQUEMENT MODIFIÉ

(30) Priorität: 16.07.2021 DE 102021003686
(43) Veröffentlichungstag der Anmeldung: 18.01.2023
(73) Patentinhaber: Kappler, Günter, 82205 Gilching (DE)
(72) Erfinder: Kappler, Günter, 82205 Gilching (DE)

(56) Entgegenhaltungen:
- CN-A- 111 672 928
- CN-A- 112 932 906
- KR-A- 20050 113 402
- US-A- 4 120 635
- US-A- 5 829 483
- US-A1- 2014 191 494
- US-B2- 10 948 108
- US-B2- 8 991 438

## Beschreibung

Die vorliegende Erfindung betrifft ein flexibles Element, das mindestens einen Wellenbalg umfasst.

### Stand der Technik

Flexible Elemente aus Metall werden u.a. als flexible Leitungselemente in Rohrleitungen für gasförmige- und flüssige Medien eingebaut, um Relativbewegungen und Schwingungen auszugleichen. Anwendungsbereiche sind z.B. Kraft- oder Nutzfahrzeuge mit Verbrennungsmotoren sowie Verbrennungsmotoren und Turbomaschinen im Allgemeinen. Darüber hinaus werden solche Rohrleitungssysteme in industriellen Anlagen, technischen Gebäudeausstattungen und chemischen Reaktoren verbaut. Die Relativbewegungen und Schwingungen treten während des Betriebs auf z.B. durch die Unwucht rotierender Bauteile, dynamische Laständerungen, Trägheitsmomente oder thermische Längenänderungen.

Die Flexibilität der Elemente wird mechanisch realisiert in Form elastischer Wellenbälge. Wellenbälge sind ringförmige Zylinder mit einem wellenförmig wechselnden Durchmesser, wobei die Symmetrieachse eines einzelnen Wellenbalges senkrecht zur Längsachse des flexiblen Elements ausgeführt ist. Bei Verbrennungsmotoren u.a. im Automobilbau werden beispielsweise im Abgasstrang mehrwellige, ringgewellte Metallbälge eingesetzt. In den meisten Fällen sind die Bälge torsionssteif ausgeführt, z.B. in Form eines mehrwelligen Parallelbalges. Diese geometrisch konventionelle Ausgestaltung eines mehrwelligen Wellenbalges ist z.B. in DE 10 2015 009 246 A1 oder DE 20 2011 102 549 U1 beschrieben. Abweichend von den Standardausführungen ist in DE 198 24 095 A1 ein Entkopplungselement beschrieben, wobei der Balg wendelgewellt ausgeführt ist, um die Torsionssteifigkeit zu reduzieren. DE 10 2018 221508 A1 beschreibt ein Verbundrohr für Klima -und Lüftungstechnik und weist ein glattes Innenrohr und ein gewelltes Außenrohr auf. Es weist einander gegenüberliegende kleine Seitenwand-Abschnitte und diese miteinander verbindende ballige große Seitenwand-Abschnitte auf. Die kleinen Seitenwand-Abschnitte sind teilkreisförmig ausgebildet. Die Wellenberge weisen eine Profilhöhe auf, die gleich oder größer der Teilung ist. US10948108 B2 beschreibt einen Kanal für ein Turbinentriebwerk, wie z.B. ein Gasturbinentriebwerk, um ein Fluid von einem Teil des Triebwerks zu einem anderen zu leiten. Die Leitung kann ein rohrförmiges Metallelement mit einer variablen Wandstärke, einem variablen Querschnitt oder einer engen Biegung umfassen. Eine solche Leitung kann mittels additiver Fertigung oder Metallabscheidung auf einem Dorn hergestellt werden. KR20050113402A beschreibt einen Faltenbalg, das aus einer Vielzahl von Falten besteht, die in vorbestimmten Teilungsintervallen gefaltet sind, um Kontraktion und Expansion in Längsrichtung zu ermöglichen. CN111672928A beschreibt ein Verfahren zur Herstellung von Metall-Wellrohren mittels Walzer CN 112 932 906 A beschreibt einen faltenbalgförmigen weichen Aktuator.

Mehrwellige Metallbälge werden mittels eines kostenintensiven Herstellungsprozesses realisiert. Sie bestehen aus einem oder mehreren ineinander gesteckten Blechzylindern, die aus zugeschnittenen, gerundeten und anschließend geschweißten Blechzuschnitten bestehen. Anschließend werden die ineinander gesteckten Blechzylinder zu einem Wellenbalg verformt z.B. mittels Hydroumformung, Rollumformung oder Elastomerverfahren. Beim Elastomerverfahren zum Beispiel wird ein Elastomerring in die Blechzylinder eingeführt. Der Elastomerring dehnt sich in den ineinander gesteckten Blechzylindern aus und formt dabei die Wellenbälge des Metallbalgs. Im Detail werden zunächst die ineinandergesteckten Blechzylinder in ein Formgebungswerkzeug eingelegt. Anschließend wird ein Elastomerring, der sich im Inneren der ineinandergesteckten Blechzylinder befindet, mit Hilfe eines Dorns und eines Matrizenhalters mit axialer Druckkraft beaufschlagt, sodass eine Ausbeulung in radialer Richtung in die ineinandergesteckten Blechzylinder erfolgt. Um letztendlich die gewünschte Wellenkontur in Längsrichtung zu erzeugen, wird abschließend das äußere Formgebungswerkzeug zusammengedrückt. Bedingt durch die Verwendung von Blechzylindern als Halbzeuge sowie den beschriebenen Herstellungsprozessen sind die flexiblen Elemente standardmäßig rund. Ausnahmen bilden ovale Ausführungen. Auch existieren rechteckige Sonderausführungen meist für große industrielle Anwendungen. Für die großen Ausführungen mit bis zu mehreren Metern großen Querschnitten werden die Wellenbälge aus einzelnen, geformten Blechen zusammengeschweißt.

Der allgemeine Nachteil von mehrwelligen Metallbälgen ist der beschriebene aufwändige und kostenintensive Herstellungsprozess. Die existierenden Verfahren im Bereich der Umformtechnik limitieren die geometrische Gestaltungsfreiheit in der Auslegung der flexiblen Elemente. Hohe Investitionen in den aufwändigen Herstellungsprozess schränken die Gestaltungsfreiheit ein, da nur mit einer hohen Stückzahl die wirtschaftlichen Anforderungen erfüllt werden können. Für kostengünstige Entkopplungselemente müssen danach Normierungen in Form standardisierter, vorgegebener Größen eingehalten werden. Als ein Nachteil ergibt sich beispielsweise eine vorgegebene Auswahl an Rohrdurchmessern, die aus standardisierten und damit kostengünstigen Blechzylindern vorgegeben werden. Die Enden des mehrwelligen Balges haben damit den gleichen Durchmesser. Eine flexible Querschnittsgestaltung entlang des mehrwelligen Metallbalges und bzw. oder unterschiedliche Durchmesser an den Enden sind im Allgemeinen nicht möglich. Eine weitere Einschränkung ist, dass die Höhen der Bälge und damit die Flexibilität der Elemente durch den umformenden Herstellungsprozess limitiert sind. Eine zusätzliche Einschränkung gemäß dem beschriebenen Stand der Technik führt dazu, dass die Achsen beider Enden koaxial sind. Kurven und oder ein zwei- oder dreidimensionaler Kurvenverlauf des mehrwelligen Wellenbalges ist nicht möglich.

Alternativ zum konventionellen Verfahren könnten flexible Elemente auch durch additive Fertigungsverfahren hergestellt werden. Additive Fertigung bezeichnet Fertigungsverfahren, bei denen dreidimensionale Gegenstände in einem automatisierten Prozess schichtweise aus formlosem oder formneutralem Material aufgebaut werden. Heutzutage existiert eine Vielzahl von additiven Verfahren, die mit unterschiedlichen Wirkprinzipien und Werkstoffen arbeiten. Die Eigenschaften und möglichen Anwendungsgebiete der damit hergestellten Bauteile unterscheiden sich mitunter erheblich. Ein Verfahren zur Erstellung metallischer Bauteile ist das selektive Laserschmelzen. Dabei werden die Bauteile schichtweise in einem Pulverbett aufgebaut. Hierzu wird in einem ersten Schritt auf einer Grundplattform Pulver in einer definierten Schichtstärke aufgetragen. In einem zweiten Schritt wird durch Energieeinbringung in Form eines über die Grundplattform lenkbaren Lasers, das Metall punktuell mit der vorhergehenden Schicht verschweißt. In einem anderen Verfahren wie dem Fused Deposition Modeling erfolgt der Schichtaufbau durch die Zuführung eines schmelzfähigen Kunststoffs. Dabei wird das Bauteil schichtweise aus einzelnen Kunststoffsträngen aufgebaut, indem ein als Filament bezeichneter Kunststoffdraht durch eine Düse extrudiert wird. Darüber hinaus existiert eine weitere Vielzahl an spezifischen Technologien zum schichtweisen Aufbau eines Gegenstands.

Nahezu allen additiven Technologien gemein ist die Limitierung, dass Überhänge entlang des vertikalen Aufbaus nicht ohne zusätzliche Stützkonturen realisiert werden können. Ab einer Neigung von ca. 45° zur horizontalen Ebene bzw. zur Grundplattform wird die neu aufzutragende Schicht nicht ausreichend gestützt und es kommt zu fehlhaften Verfestigungen. Beim selektiven Laserschmelzen z.B. kann die Bauteilgeometrie aufgrund der hohen Fließfähigkeit des Metallpulvers im Pulverbett versinken oder sich verschieben. Die Stützstrukturen werden von der Grundplattform oder aber auch von der nächstgelegenen, darunter liegenden Fläche des Gegenstands mit aufgebaut.

Stützstrukturen geben den additiv hergestellten Bauteilen an erforderlichen Stellen wie Überhängen Halt und müssen nach dem Aufbauprozess entfernt werden. Diese Nachbearbeitung erhöht die Fertigungskosten und sie erhöht das Risiko von Beschädigungen des Bauteils. Darüber hinaus erfordern Stützstrukturen während der Fertigung zusätzlichen Materialeinsatz und sie erhöhen damit auch die Fertigungszeit und - kosten.

Folglich ist ein zentraler Gesichtspunkt sowohl in der konstruktiven Auslegung als auch in der Prozessfestlegung additiv gefertigter Bauteile, auf erforderliche Stützstrukturen zu achten und deren Anzahl bzw. Umfang zu minimieren.

### Darstellung der Erfindung

Es ist somit eine Aufgabe dieser Erfindung, ein flexibles Element in Form eines Wellenbalges bereitzustellen, mit dem die Nachteile der gestalterischen Limitierung heutiger, meist mittels Umformverfahren hergestellter flexibler Elemente vermieden werden. Es ist weiterhin eine Aufgabe der Erfindung, verbesserte flexible Elemente in Bezug auf die duktile Ausgestaltung für den individuellen Anwendungsfall bereitzustellen. Des Weiteren ist es eine Aufgabe der Erfindung, eine für die additive Fertigung optimierte Gestaltung der Balgkontur bereitzustellen.

Erfindungsgemäß wird diese Aufgabe durch ein flexibles Element mit den Merkmalen des Patentspruchs 1 gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Entsprechend wird ein flexibles Element vorgeschlagen, das mindestens einen Wellenbalg aufweist, wobei das flexible Element hohl ausgestaltet ist und ein erstes Ende und ein zweites Ende hat, dadurch gekennzeichnet, dass die Kontur des flexiblen Elements in einem Querschnitt entlang einer y- Achse einen Winkel zu der y- Achse von größer 30° zwischen einem ersten Scheitelpunkt und einem zweiten Scheitelpunkt aufweist. Beispielhaft liegt der erste Scheitelpunkt der äußeren Kontur auf der horizontalen xy-Ebene eines dreidimensionalen Koordinatensystems. Die Querschnittskontur eines Wellenbalges bezogen auf eine senkrechte yz-Ebene ist dadurch charakterisiert, dass an allen Punkten der Kurve der kleinere Nebenwinkel zwischen der zu dem Punkt gehörenden Tangente und der horizontalen Ebene stets größer als 30° ist. Die variable Kontur ist innerhalb dieser Limitierung frei wählbar und kann geradlinig oder kurvenförmig ausgeführt sein. In einer beispielhaften geometrischen Ausführung entspricht der Querschnitt quer zur x-Achse bzw. Längsachse des flexiblen Elements einer Raute mit einem Innenwinkel von 50° am ersten und zweiten Scheitelpunkt und einem Innenwinkel von 40° an den zwei anderen Ecken. Fertigungsbedingt kann es erforderlich sein, die eckige Ausführung in den Scheitelpunkten mittels kleiner Radien zu verrunden, deren Größe abhängig ist von der Dimension des Wellenbalges oder der verwendeten Fertigungstechnologie. Es wurde dabei überraschend festgestellt, dass somit Bauteile ohne Stützstrukturen hergestellt werden können. Des Weiteren erlaubt eine solche Ausgestaltung eine hohe Variabilität in der Formgestaltung des flexiblen Elements. Beispielsweise können somit ovale oder eckige Konturen hergestellt werden, die im Vergleich zum vorgestellten Stand der Technik Verfahren nicht hergestellt werden können.

Der erste und zweite Scheitelpunkt sind vorzugsweise gegenüberliegend angeordnet und können auch als oberer und unterer Scheitelpunkt bezeichnet werden.

Im Folgenden bezeichnet die x-Achse die Längsachse des flexiblen Elements.

Die y-Achse ist als horizontale Achse zu verstehen, welche quer zur Längsachse des flexiblen Elements steht. In anderen Worten ist die Achse die Breitenrichtung des flexiblen Elements.

Die z-Achse steht quer zur x-Achse und zu der y-Achse und stellt die Höhenrichtung des flexiblen Elements dar.

Unter einem Scheitelpunkt wird ein Punkt verstanden, der einen Wendepunkt der Kontur des flexiblen Elements darstellt. Vorzugsweise weist das flexible Element mindestens 2 Scheitelpunkte auf. Beispielsweise können diese gegenüberliegend entlang der Symmetrieachse des flexiblen Elements angeordnet sein. In anderen Worten erstreckt sich eine Verlängerungslinie durch den Scheitelpunkt entlang der y-Achse bzw. parallel in Bezug auf diese.

Gemäß einer bevorzugten ersten Ausführungsform weist das flexible Element einen Wellenbalg auf, dessen Kontur entlang einer y-Achse gerade Konturabschnitte in einem 40°-Winkel hat. Die Kontur ist symmetrisch zur xz-Ebene und symmetrisch zu einer Parallelebene der xy-Ebene, die durch den Mittelpunkt der Diagonalen verläuft, die die Scheitelpunkte verbindet. Die Kontur entspricht einer Raute, deren seitlichen Ecken mit einem Radius verrundet sind, dessen Mittelpunkt auf dem Schnittpunkt der Diagonalen liegt. Der Abstand der Scheitelpunkte beträgt 80mm und die Kontur ist in diesen Punkten mit einem Radius von 5mm abgerundet.

In einer vorteilhaften Variante der ersten Ausführungsform ist die Wandstärke des flexiblen Elements konstant mit 0,5mm ausgeführt. Die Wandstärke kann dabei in Abhängigkeit der gewünschten Steifigkeit konstant zwischen 0,2mm bis 5mm ausgeführt werden. Da die Wandstärke ein zentraler Faktor für die Auslegung der Steifigkeit ist - je dünner desto flexibler - bietet die Variabilität in der Wandstärkenausführung den Vorteil, das flexible Element passgenau an den gewünschten Anwendungsfall anzupassen.

In einer weiteren vorteilhaften Variante der ersten Ausführungsform ist die Wandstärke entlang der Kontur eines Balges in Abhängigkeit der gewünschten Steifigkeit variabel in dem zuvor genannten Wandstärkenbereich ausgeführt.

Gemäß der bevorzugten ersten Ausführungsform kann das flexible Element in x-Richtung mehrere Wellenbälge in einem Abstand von 2,6mm aufweisen. Der Abstand kann je nach Anwendungsfall frei gewählt werden zwischen 1mm bis 20mm, bevorzugt zwischen 1,5mm und 5mm auf. Auch hier bietet die Variabilität Vorteile für die passgenaue Auslegung an die individuellen Anwendungsfälle. Zur Erhöhung der Flexibilität auf begrenztem Bauraum sollte der Abstand so gering wie möglich gewählt werden um möglichst viele Wellenbälge unterzubringen. Begrenzt wird der Mindestabstand auf die angegebenen ca. 1,5mm durch die erforderlichen axialen Verschiebewege, wenn das flexible Element gestaucht wird.

In einer vorteilhaften Variante der ersten Ausführungsform sind die Querschnittskonturen der Wellenbälge in yz-Ebene identisch. Das bedeutet, dass die Höhe jedes Wellenbalges des flexiblen Elements, definiert als Abstand zwischen dem äußeren Radius und dem inneren Radius zwischen 1mm bis 100mm, bevorzugt zwischen 10mm bis 20mm ist. Die Höhe kann entlang der Kontur in einem Querschnitt in yz-Ebene entlang einer y-Achse variabel oder konstant ausgestaltet sein. Alternativ kann in einer weiteren bevorzugten Ausführungsform die Querschnittskontur der Wellenbälge in yz-Ebene unterschiedlich sein. Das ist z.B. in Anwendungsfällen vorteilhaft, um maximale Duktilität bei eingeschränkten Bauraumverhältnissen zu realisieren.

Gemäß einer weiteren bevorzugten Variante der ersten Ausführungsform folgt das flexible Element einer Leitkurve. Als Leitkurve wird eine beliebige zwei- oder dreidimensionale Kurve verstanden, die die Achsen der Enden des flexiblen Elements tangential stetig miteinander verbindet. Jeder Balg des flexiblen Elements ist senkrecht zu dieser Leitkurve angeordnet. Dadurch ist z.B. die Anordnung des flexiblen Elements in Anwendungsfällen von Rohrleitungen nicht mehr auf geradlinige Abschnitte beschränkt sondern grundsätzlich frei positionierbar. Dadurch können sich weiterhin Vorteile sowohl für die angrenzenden Bauteile ergeben als auch für die Schwingungsauslegung des Gesamtsystems.

Gemäß einer weiteren bevorzugten Variante der ersten Ausführungsform weist das flexible Element mindestens eine doppelwandige Struktur auf, wobei grundsätzlich ein durchgehender Abstand zwischen den Wandungen der mehrwandigen Struktur entlang des Wellenbalges realisiert ist. Die Zusammenführung der Wandungen erfolgt an den Enden. Der Abstand der Wandungen kann konstant oder variabel zwischen 0,3mm und 10mm ausgeführt werden. Im Gegensatz dazu müssen flexiblen Elementen bestehend aus mehrwandigen Wellenbälgen gemäß dem eingangs beschriebenen Stand der Technik ohne Abstände zwischen den Wandungen ausgeführt werden. Allerdings können Abstände zwischen den Wandungen technische Vorteile aufweisen. Als Beispiel kann sowohl die aufgrund des Abstandes realisierte Erhöhung der Wärmeisolierung als Vorteil für das erfindungsgemäße flexible Element genannt werden als auch die Vermeidung von Reibung zwischen den Wandungen.

Gemäß einer weiteren bevorzugten Variante der ersten Ausführungsform sind die Querschnitte der Enden unterschiedlich groß. Z.B. können in Rohrleitungsanwendungen Rohrquerschnittserweiterungen bzw. Rohquerschnittsverjüngungen entlang des flexiblen Elements realisiert werden. Im Vergleich zu den flexiblen Elementen gemäß dem Stand der Technik mit konstanten Querschnitten an den Enden können sich z.B. in Rohrleitungssystemen Vorteile an den angrenzenden Bauteile mit unterschiedlichen Durchmessern ergeben, die nicht mehr extra an die Durchmesser der Enden des flexiblen Elements angepasst werden müssen.

Gemäß einer weiteren bevorzugten Variante der ersten Ausführungsform ist die Mittelachse von dem ersten Ende entlang der Längsrichtung des flexiblen Elements versetzt zur Mittelachse von dem zweiten Ende entlang der Längsrichtung des flexiblen Elements.

In einer vorteilhaften Variante der ersten Ausführungsform sind die Enden mit gleichen oder unterschiedlichen Flanschtypen als Integralteil mit dem flexiblen Element ausgestaltet. Die Flanschtypen können je nach Anwendungsfall individuell an die angrenzenden Leitungselemente angepasst werden und u.a. in Form freier runder Rohrenden, Konturen für Schraubverbindungen oder für Schellenverbindungen ausgeführt sein.

Gemäß der bevorzugten ersten Ausführungsform ist das flexible Element aus Metall. Gängige Metalle sind u.a. austenitische Stähle wie z.B. 1.4404 oder 1.4501. Alternativ ist in einer weiteren bevorzugten Ausführungsform das flexible Element aus Kunststoff.

Erfindungsgemäß ist das flexible Element mittels additiver Fertigungsverfahren hergestellt. Durch die erfindungsgemäße Gestaltung ist die Fertigung des flexiblen Elements für die additive Fertigung optimiert, da im Zuge der additiven Herstellung sogenannte Stützstrukturen vermieden werden. Gemäß der erfindungsgemäßen Ausgestaltung wird das Bauteil mittels additiver Fertigung nicht entlang der x-Achse aufgebaut sondern entlang der z-Achse. Das hat überraschenderweise auch materialspezifische Vorteile für die Flexibilität des Bauteils, da additiv hergestellte Bauteile aufgrund des Fertigungsverfahrens mit schichtweisem Aufbau entlang der z-Achse, anisotrope Werkstoffeigenschaften aufweisen. Das bedeutet, dass die für die Flexibilität des Bauteils relevanten Werkstoffkennwerte wie Elastizitätsmodul oder die Streckgrenze entlang der x-Achse als auch entlang der y-Achse höher und damit duktiler sind als entlang der z-Achse. Diese Eigenschaften gelten auch für ein flexibles Element (1), hergestellt aus Kunststoff mittels geeigneter additiver Verfahren wie Fused Deposition Modeling oder Stereolithographie.

Weitere Varianten sind möglich und basieren auf dem Grundkonzept, dass die Kontur des flexiblen Elements in einem Querschnitt entlang einer y- Achse einen Winkel zu der y- Achse von größer 30° zwischen einem ersten Scheitelpunkt und einem zweiten Scheitelpunkt aufweist.

Die zuvor beschriebenen bevorzugten Ausführungsformen und Merkmale der Erfindung sind beliebig miteinander kombinierbar. Weitere Merkmale und Vorteile der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Hierbei zeigen:
Fig. 1 eine schematische Frontansicht eines hohlen flexiblen Elements (1) aufweisend ein Ende (3) und die Kontur des ersten Wellenbalg (2) entlang der yz-Ebene gemäß einer ersten Ausführungsform der Erfindung;
Fig. 2 eine schematische Seitenansicht eines flexiblen Elements (1) entlang der xz-Ebene aufweisend sieben Wellenbälge senkrecht zur Längsachse gemäß einer ersten Ausführungsform der Erfindung;
Fig. 3 eine schematische isometrische Ansicht eines hohlen flexiblen Elements (1) aufweisend sieben Wellenbälge senkrecht zur Längsachse gemäß einer ersten Ausführungsform der Erfindung;
Fig. 4 eine schematische Querschnittsansicht eines hohlen flexiblen Elements (1) entlang der z-Achse auf die die xy-Ebene durch den Mittelpunkt der Linie zwischen den Scheitelpunkten aufweisend acht Bälge senkrecht zu einer Leitkurve gemäß einer bevorzugten Variante der ersten Ausführungsform der Erfindung.

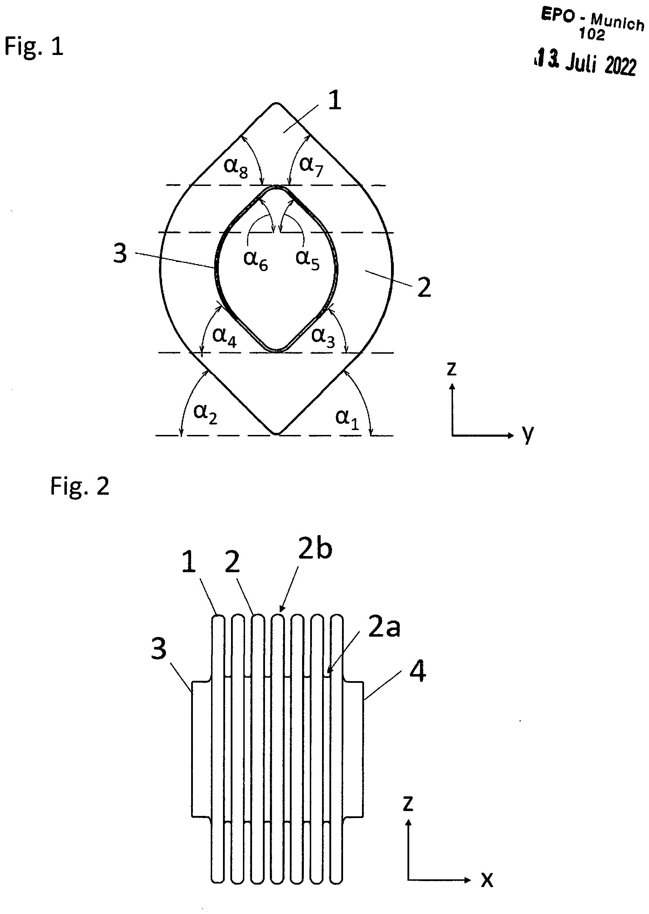

In Fig. 1 ist eine schematische Frontansicht eines hohlen flexiblen Elements 1 aufweisend ein Ende 3 und die Kontur des ersten Wellenbalgs 2 entlang der yz-Ebene gemäß einer ersten Ausführungsform der Erfindung dargestellt. Die Kontur des Wellenbalgs entspricht einer Raute mit einem Innenwinkel von 50° an den Scheitelpunkten, deren seitlichen Ecken mit einem Radius verrundet sind, dessen Mittelpunkt auf dem Schnittpunkt der Diagonalen liegt. Erfindungsgemäß ist die Kontur des Wellenbalgs 2 so ausgeführt, dass an allen Punkten auf der Kontur der kleinere Nebenwinkel zwischen der zu dem Punkt gehörenden Tangente und der horizontalen Ebene stets größer als 40° ist. Die Kontur an den Scheitelpunkten ist mit einem kleinen Radius von 5mm verrundet. Das kann fertigungstechnisch von Vorteil sein. Das Ende 3 entspricht in Fig. 1 der Kontur des Wellenbalges entlang des Innenradius 2a des Wellenbalges wie in Fig.2 ersichtlich. Alle Wellenbälge sind entlang der x-Achse angeordnet. Das flexible Element 1 in Fig.1 zeichnet sich dadurch aus, dass die Konturen aller Wellenbälge identisch ausgeführt sind wie der in dieser Fig. 1 dargestelltem erstem Wellenbalg. Wie in den Ansprüchen und der Beschreibung aufgeführt, kann die Form beliebig ausgeführt sein solange das Kriterium berücksichtigt bleibt, dass jeder Winkel der Wandung größer als 30°, bevorzugt größer als 40° ist. Zusätzlich besteht die Freiheit in der Ausgestaltung darin, jeden Balg unterschiedlich voneinander auszuführen anstelle sie identisch zu machen wie in Fig. 1 dargestellt.

In Fig. 2 ist eine schematische Seitenansicht eines flexiblen Elements 1 entlang der xz-Ebene aufweisend sieben Wellenbälge gemäß einer ersten Ausführungsform der Erfindung mit koaxialen Enden 3,4 und konstanten Wellenbalghöhen dargestellt. Die Flexibilität wird durch die wellenförmige Kontur der dünnwandigen Wellenbälge, in Fig.2 mit einer Wandstärke von 0,5mm realisiert. Die Höhe der Wellenbälge, charakterisiert als Abstand zwischen dem Außenradius 2b und dem Innenradius 2a, ist zusammen mit der Wandstärke ein entscheidendes Kriterium für die Duktilität eines Wellenbalges und beträgt in Fig.2 13mm. Je größer die Höhe eines Wellenbalges, umso flexibler ist das Element 1. In Fig. 2 ist eine einfache Form der Wellenkontur mit senkrecht verlaufenden Wellenbalgkonturen in z-Richtung dargestellt. Die Ausführung der Wellenbalgkontur - in Fig. 2 entlang der xz-Ebene - kann anders als dargestellt ausgeführt werden, um die Duktilität zu optimieren. Begrenzt wird der Gestaltungsspielraum der Wellenbalgkontur durch den zur Verfügung stehenden Bauraum, der durch die angrenzenden Wellenbälge in zusammengedrücktem Zustand limitiert wird sowie dem erfindungsgemäß genannten Kriterium zur Vermeidung von Winkeln entlang der Wellenbalgwandung kleiner 30°, bevorzugt 35° und besonders bevorzugt größer 40° zur horizontalen Ebene.

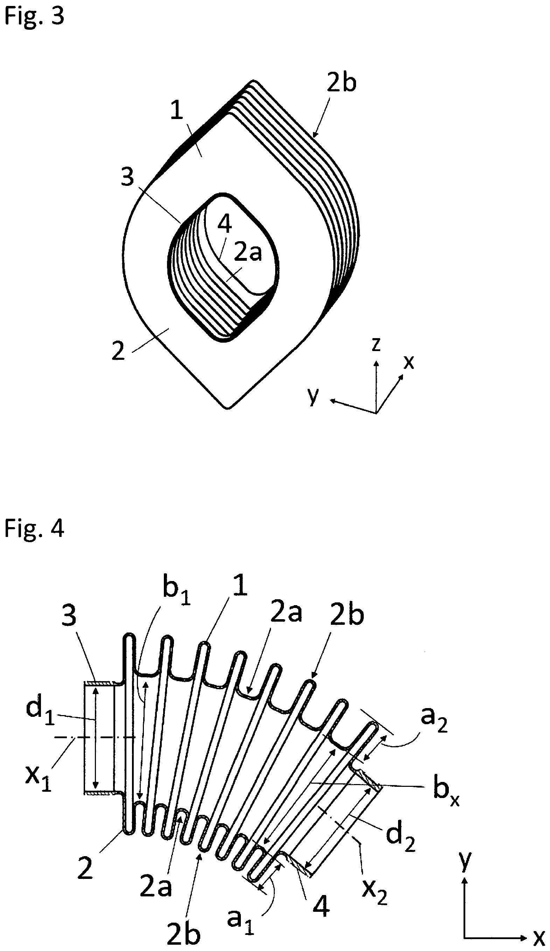

In Fig. 3 ist eine schematische isometrische Ansicht eines flexiblen Elements 1 aufweisend sieben Wellenbälge gemäß einer ersten Ausführungsform der Erfindung mit koaxialen Enden 3,4 und konstanten Balghöhen dargestellt. Das flexible Element 1 stellt die isometrische Ansicht der in Fig.2 dargestellten Ausführung dar.

In Fig. 4 ist eine schematische Querschnittsansicht eines hohlen flexiblen Elements (1) entlang der z-Achse auf die die xy-Ebene durch den Mittelpunkt der Linie zwischen den Scheitelpunkten aufweisend acht Bälge senkrecht zu einer Leitkurve gemäß einer bevorzugten Variante der ersten Ausführungsform der Erfindung dargestellt. Die einzelnen, dünnwandigen Wellenbälge mit einer Wandstärke von 0,5mm sind für den entspannten Auslegungsfall senkrecht entlang einer zweidimensionalen Leitkurve auf der xy-Ebene angeordnet, die die versetzt zueinander liegenden Enden 3 und 4 tangential stetig miteinander verbindet. Die als Integralteil zusätzlich zum flexiblen Element ergänzten Enden 3 und 4 auf beiden Seiten sind in dieser Ausführung als runde Schweißrohrenden ausgeführt, deren jeweiligen Achsen x₁ und x₂ versetzt zueinander sind. Die Wellenbälge 2 haben in der dargestellten Ausführung jeweils einen konstanten Innenquerschnitt, charakterisiert durch den Abstand der Innenradien b₁ bis bₓ der einzelnen Wellenbälge 2. Andere bevorzugte Ausführungsformen sind dadurch gekennzeichnet, dass die Größe der Innenquerschnitte und auch der Enden unterschiedlich groß sind. In einer extremen, nicht strömungsführenden Ausführung können die Wellenbälge an einem Ende so klein werden, dass das Ende des Wellenbalges die Form einer geschlossenen Spitze ergibt. In der dargestellten Ausführung ist die Wellenbalghöhe entlang des Umfangs eines Wellenbalges unterschiedlich groß, hier dargestellt mit a₁ und a₂. Vorteilhaft ist an der gezeichneten Ausführung, dass die reduzierte Wellenbalghöhe des zur Leitkurve innenliegenden Balganteils eine stärkere Krümmung der Mittelkurve ermöglicht. Hohe Bälge hätten bei zu großer Krümmung zur Folge, dass die Balgkontur im Bereich der Außenradien 2b zu nah aneinander liegen bzw. im Falle einer einsatzbedingten Stauchung aneinander stoßen.

Obwohl die Erfindung unter Bezugnahme auf bestimmte Ausführungsbeispiele beschrieben worden ist, ist es ersichtlich, dass viele Modifikationen ausgeführt werden können ohne den Bereich der Erfindung zu verlassen. Aus diesem Grund wird die Erfindung nicht auf die offenbarten Ausführungsbeispiele begrenzt, sondern soll alle Ausführungsbeispiele umfassen, die in den Bereich der beigefügten Patentansprüche fallen.

## Patentansprüche

1. Flexibles Element (1) aufweisend mindestens einen Wellenbalg (2), wobei das flexible Element hohl ausgestaltet ist und ein erstes Ende (3) und ein zweites Ende (4) aufweist, wobei die variable Kontur des flexiblen Elements in einem Querschnitt entlang einer y- Achse, welche quer zur Längsachse, x-Achse, des flexiblen Elements steht und in Breitenrichtung zeigt, stets einen Winkel zu der y-Achse von größer 30° zwischen einem ersten Scheitelpunkt und einem zweiten Scheitelpunkt aufweist, **dadurch gekennzeichnet, dass** das flexible Element (1) mittels additiver Fertigungsverfahren entlang der z-Achse, welche quer zur y-Achse und zur x-Achse steht und in Höhenrichtung des flexiblen Elements zeigt, hergestellt ist.

2. Flexibles Element (1) nach Anspruch 1, **dadurch gekennzeichnet, dass** Konturabschnitte des Wellenbalges (2) einen Winkel (α1 bis α8) größer 35°, besonders bevorzugt größer 40° zu der y-Achse aufweist.

3. Flexibles Element (1) nach Anspruch 1 bis 2, wobei die Wandstärke des flexiblen Elements zwischen 0,2mm bis 5mm ist und die Wandstärke variabel oder konstant in diesem Wandstärkenbereich ausgestaltet ist.

4. Flexibles Element (1) nach einem der vorhergehenden Ansprüche, aufweisend mehrere Wellenbälge in einem Abstand von 1mm bis 20mm, bevorzugt zwischen 1mm und 5mm.

5. Flexibles Element (1) gemäß einem der vorhergehenden Ansprüche, **dadurch gekennzeichnet, dass** eine Höhe jedes Wellenbalges (2) des flexiblen Elements (1), definiert als Abstand zwischen dem äußeren Radius (2b) und dem inneren Radius (2a), zwischen 1mm bis 100mm, bevorzugt zwischen 10mm bis 20mm ist.

6. Flexibles Element (1) gemäß einem der vorhergehenden Ansprüche, **dadurch gekennzeichnet, dass** die Vielzahl der Wellenbälge (2) des flexiblen Elements (1) quer entlang einer zwei- oder dreidimensionalen Mittelachse in Längsrichtung angeordnet sind.

7. Flexibles Element (1) gemäß einem der vorhergehenden Ansprüche, **dadurch gekennzeichnet, dass** die Wellenbälge (2) eine mindestens doppelwandige Struktur aufweisen.

8. Flexibles Element (1) nach Anspruch 7, wobei der Abstand zwischen den Wandungen der doppelwandigen Struktur zwischen 0,3mm und 10mm ist.

9. Flexibles Element (1) gemäß einem der vorhergehenden Ansprüche, wobei die Querschnitte der Enden (3 und 4) unterschiedlich groß sind.

10. Flexibles Element (1) nach einem der vorhergehenden Ansprüche, wobei die Mittelachse von dem ersten Ende (3) entlang der Längsrichtung des flexiblen Elements und die Mittelachse von dem zweiten Ende (4) entlang der Längsrichtung des flexiblen Elements versetzt zueinander angeordnet sind.

11. Flexibles Element (1) nach einem der vorhergehenden Ansprüche, wobei die Enden (3; 4) mit gleichen oder unterschiedlichen Flanschtypen als Integralteil mit dem flexiblen Element (1) ausgestaltet sind.

12. Flexibles Element (1) nach einem der vorhergehenden Ansprüche, **dadurch gekennzeichnet, dass** das flexible Element (1) aus Kunststoff oder Metall ist.

## Claims

1. A flexible element (1) having at least one corrugated bellows (2), wherein the flexible element is hollow and has a first end (3) and a second end (4), wherein the variable contour of the flexible element in a cross-section along a y-axis, which is transverse to the longitudinal axis, x-axis, of the flexible element and orientated in the width direction, always has an angle to the y-axis of greater than 30° between a first vertex and a second vertex, **characterised in that** the flexible element (1) is produced by means of additive manufacturing processes along the z-axis, which is transverse to the y-axis and the x-axis and orientated in the height direction of the flexible element.

2. The flexible element (1) according to claim 1, **characterised in that** contour sections of the corrugated bellows (2) have an angle (α1 to α8) greater than 35°, particularly preferably greater than 40° to the y-axis.

3. The flexible element (1) according to claim 1 to 2, wherein the wall thickness of the flexible element is between 0.2 mm and 5 mm and the wall thickness is variable or constant in this wall thickness range.

4. The flexible element (1) according to one of the preceding claims, comprising a plurality of corrugated bellows at a distance of 1mm to 20mm, preferably between 1mm and 5mm.

5. The flexible element (1) according to one of the preceding claims, **characterized in that** a height of each corrugated bellows (2) of the flexible element (1), defined as a distance between the outer radius (2b) and the inner radius (2a), is between 1mm to 100mm, preferably between 10mm to 20mm.

6. The flexible element (1) according to one of the preceding claims, **characterized in that** the plurality of corrugated bellows (2) of the flexible element (1) are arranged transversely along a two- or three-dimensional central axis in the longitudinal direction.

7. The flexible element (1) according to one of the preceding claims, **characterized in that** the corrugated bellows (2) have an at least double-walled structure.

8. The flexible element (1) according to claim 7, wherein the distance between the walls of the double-walled structure is between 0.3 mm and 10 mm.

9. The flexible element (1) according to one of the preceding claims, wherein the cross-sections of the ends (3 and 4) are of different sizes.

10. The flexible element (1) according to one of the preceding claims, wherein the center axis of the first end (3) along the longitudinal direction of the flexible element and the center axis of the second end (4) along the longitudinal direction of the flexible element are arranged offset to each other.

11. The flexible element (1) according to one of the preceding claims, wherein the ends (3; 4) with the same or different flange types are designed as an integral part with the flexible element (1).

12. The flexible element (1) according to one of the preceding claims, **characterized in that** the flexible element (1) is made of plastic or metal.

## Revendications

1. Elément flexible (1) comprenant au moins un soufflet ondulé (2), l'élément flexible étant creux et ayant une première extrémité (3) et une seconde extrémité (4), le contour variable de l'élément flexible étant orienté dans le sens de la largeur dans une section transversale le long d'un axe y qui est transversal à l'axe longitudinal, axe x, de l'élément flexible, l'élément flexible (1) est fabriqué par des procédés de fabrication additive le long de l'axe z, qui est transversal à l'axe y et à l'axe x et qui pointe dans la direction de la hauteur de l'élément flexible.

2. Elément flexible (1) selon la revendication 1, **caractérisé en ce que** des parties de contour du soufflet ondulé (2) présentent un angle (α1 à α8) supérieur à 35°, de préférence supérieur à 40° par rapport à l'axe y.

3. Elément flexible (1) selon les revendications 1 à 2, dans lequel l'épaisseur de paroi de l'élément flexible est comprise entre 0,2 mm et 5 mm et l'épaisseur de paroi est conçue de manière variable ou constante dans cette plage d'épaisseur de paroi.

4. Elément flexible (1) selon l'une quelconque des revendications précédentes, comprenant une pluralité de soufflets ondulé espacés de 1 mm à 20 mm, de préférence de 1 mm à 5 mm.

5. Elément flexible (1) selon l'une quelconque des revendications précédentes, **caractérisé en ce qu'**une hauteur de chaque soufflet ondulé (2) de l'élément flexible (1), définie comme la distance entre le rayon externe (2b) et le rayon interne (2a), est comprise entre 1 mm et 100 mm, de préférence entre 10 mm et 20 mm.

6. Elément flexible (1) selon l'une quelconque des revendications précédentes, **caractérisé en ce que** la pluralité de soufflets ondulé (2) de l'élément flexible (1) sont disposés transversalement le long d'un axe central bi- ou tridimensionnel dans la direction longitudinale.

7. Elément flexible (1) selon l'une quelconque des revendications précédentes, **caractérisé en ce que** les soufflets ondulé (2) ont une structure au moins à double paroi.

8. Elément flexible (1) selon la revendication 7, dans lequel la distance entre les parois de la structure à double paroi est comprise entre 0,3mm et 10mm.

9. Elément flexible (1) selon l'une quelconque des revendications précédentes, dans lequel les sections transversales des extrémités (3 et 4) sont de tailles différentes.

10. Elément flexible (1) selon l'une quelconque des revendications précédentes, dans lequel l'axe central de la première extrémité (3) est décalé le long de la direction longitudinale de l'élément flexible et l'axe central de la deuxième extrémité (4) est décalé le long de la direction longitudinale de l'élément flexible.

11. Elément flexible (1) selon l'une quelconque des revendications précédentes, dans lequel les extrémités (3 ; 4) ayant des types de brides identiques ou différents sont conçues comme une partie intégrale avec l'élément flexible (1).

12. Elément flexible (1) selon l'une des revendications précédentes, **caractérisé en ce que** l'élément flexible (1) est en plastique ou en métal.
